# FASCICULE DE BREVET EUROPEEN

(11) **EP 2 350 983 B1**
(45) Date de publication et mention de la délivrance du brevet: **22.07.2020**
(21) Numéro de dépôt: 09817290.1
(22) Date de dépôt: 29.09.2009
(51) Int. Cl.: G07C 9/00

(54) **DISPOSITIF DE DÉVERROUILLAGE AUTOMATIQUE D'UN OUVRANT DE VÉHICULE AUTOMOBILE**
EINRICHTUNG ZUM AUTOMATISCHEN ENTRIEGELN EINES ÖFFNUNGSFÄHIGEN PANELS EINES KRAFTFAHRZEUGS
DEVICE FOR AUTOMATICALLY UNLOCKING AN OPENABLE PANEL OF A MOTOR VEHICLE

(30) Priorité: 01.10.2008 FR 0805456
(43) Date de publication de la demande: 03.08.2011
(73) Titulaire: U-Shin France, 94000 Créteil (FR)
(72) Inventeur: GEHIN, Fréderic, 94042 Créteil (FR)
(74) Mandataire: Verriest, Philippe
(86) Numéro de dépôt international: PCT/EP2009/062604
(87) Numéro de publication internationale: WO 2010/037738

(56) Documents cités:
- EP-A- 0 629 759
- EP-A- 0 767 286
- EP-A- 0 770 749
- EP-A- 0 965 710
- EP-A- 1 006 249
- EP-A- 1 139 286
- EP-A- 1 283 503
- JP-A- 2008 002 095
- US-A1- 2005 168 322
- US-A1- 2007 205 863

## Description

La présente invention concerne un dispositif déverrouillage automatique d'un ouvrant de véhicule automobile.

Le dispositif selon l'invention s'applique, par exemple à un véhicule équipé d'un système d'accès mains libres destiné à ce qu'un utilisateur du véhicule puisse entrer dans celui-ci sans avoir à manipuler de clé ou de télécommande.

Il se développe à l'heure actuelle de nombreux systèmes, à accès mains libres, qui assurent le déverrouillage / décondamnation et l'ouverture automatiques des ouvrants du véhicule dès que l'utilisateur portant sur lui un badge d'identification approche du véhicule dans un périmètre prédéterminé. Dans ce cas, le périmètre prédéterminé est constitué par un espace extérieur entourant le véhicule, par exemple à une distance de quelques mètres jusqu'à éventuellement une dizaine de mètres. Afin de couvrir tout ce périmètre prédéterminé, on met usuellement en place un nombre important d'antennes réparties à divers endroits sur le pourtour du véhicule afin de détecter la présence de l'identifiant. De telles antennes sont par exemple disposées dans les rétroviseurs, les poignées de porte et les montants de porte. Lorsque l'identifiant s'éloigne de ce périmètre prédéterminé, le système assure la condamnation automatique des ouvrants du véhicule.

Le plus souvent un capteur d'approche est couplé au système d'accès mains libres pour qu'une tentative d'authentification soit déclenchée uniquement lorsque le capteur d'approche détecte la présence d'un utilisateur. Ainsi, dans le cas où la tentative d'authentification est un succès, le dispositif de reconnaissance déclenche le déverrouillage d'un ou de plusieurs ouvrants du véhicule. Toutefois, on rencontre parfois avec les systèmes interactifs des problèmes de déverrouillages intempestifs des ouvrants. La seule présence du porteur de badge dans l'environnement du véhicule suffit en effet à déverrouiller les portières et il arrive que les échanges entre le badge et l'unité d'émission/réception du véhicule commandent le déverrouillage des portières sans que l'utilisateur ne l'ait souhaité ou en ait conscience. De tels systèmes d'accès mains libres sont décrits dans les documents US2005/168322, EP0770749 et EP1006249.

Cependant, si le système déverrouille tous les ouvrants du véhicule, il existe le risque qu'une personne mal intentionnée s'approche du véhicule pour par exemple voler des objets dans le véhicule.

Par ailleurs, on connaît de la demande de brevet EP0770749 au nom du Demandeur un système mains libres d'une première génération fonctionnant sur la base d'une technologie à transpondeur.

Le système décrit dans cette demande permet une ouverture / déverrouillage d'un ouvrant déterminé sans intervention directe des mains. Toutefois, il impose que l'utilisateur porte un transpondeur à la poignée et qu'il présente ce transpondeur devant des antennes réceptrices installées par exemple au niveau du coffre pour pouvoir déclencher le déverrouillage / ouverture du coffre.

Ainsi, si on porte une caisse à deux mains, une telle approche de la main des antennes de transpondeur peut s'avérer mal aisé. En outre, étant donné que les échanges entre le transpondeur et les antennes réceptrices se font que sur une courte distance, l'utilisateur doit connaître assez précisément la localisation des antennes, ce qui n'est pas toujours le cas, en particulier s'il s'agit d'un véhicule de location.

Par ailleurs, la consommation d'énergie liée aux dispositifs de déverrouillage automatique de l'état de la technique est souvent importante ce qui peut provoquer lorsque le véhicule est à l'arrêt moteur éteint un déchargement prématuré de la batterie du véhicule pouvant empêcher le démarrage de ce dernier. C'est donc un objet de la présente invention de surmonter les inconvénients précités de l'état de la technique et de fournir un dispositif de déverrouillage automatique d'un ouvrant de véhicule automobile optimisant le besoin d'énergie et permettant de s'affranchir plus généralement du fait de devoir présenter un identifiant actif à un emplacement précis du véhicule pour déclencher le déverrouillage de l'ouvrant tout en conservant un niveau de sécurité élevé afin d'empêcher tout accès à des personnes mal intentionnées.

Un autre objet de l'invention est de limiter la consommation de la batterie par des moyens de reconnaissance optique par un déclenchement améliorés de ceux-ci.

A ce titre, l'invention concerne non seulement les systèmes de type systèmes d'accès main libre, mais également les dispositifs à ouverture de portes par transmission radiofréquence monodirectionnelle depuis un organe d'identification portatif jusqu'à un calculateur situé dans le véhicule, tel qu'une unité centrale.

L'invention est définie dans la revendication 1 et concerne un dispositif pour verrouiller et/ou déverrouiller automatiquement au moins un ouvrant d'un véhicule automobile comprenant un système d'ouverture à distance comprenant une unité centrale destinée à être installée à l'intérieur du véhicule, un organe d'identification portatif, ladite unité centrale étant apte à authentifier par radiofréquences l'organe d'identification portatif caractérisé en ce qu'il comprend en outre des moyens de reconnaissance optique à distance d'un geste prédéterminé d'un membre du corps pour verrouiller et/ou déverrouiller ledit au moins un ouvrant devant lequel le geste a été exécuté en cas de reconnaissance positive du geste et en ce que l'unité centrale comprend des moyens d'activation permettant d'activer lesdits moyens de reconnaissance optique à distance lorsque l'organe d'identification portatif est localisé dans un périmètre prédéfini autour du véhicule.

Selon un premier mode de réalisation, les moyens d'activation sont commandés en réponse à l'authentification de l'organe d'identification portatif. Selon un autre mode de réalisation, le système d'ouverture à distance est un système d'accès mains libres.

Selon un mode de réalisation additionnel, l'unité centrale est configurée de manière à émettre de manière cyclique des signaux radiofréquences afin de détecter la présence d'un organe d'identification portatif.

Selon un mode de réalisation supplémentaire, les signaux radiofréquences sont des signaux basse fréquence compris entre 50 et 500 kHz.

Selon un autre mode de réalisation, les signaux radiofréquences sont des signaux haute fréquence compris entre 50 et 500 MHz.

Selon un mode de réalisation additionnel, l'unité centrale comprend des moyens d'estimation de la distance entre le véhicule et l'organe d'identification portatif.

Selon un mode de réalisation supplémentaire, lesdits moyens d'estimation de la distance entre le véhicule et l'organe d'identification portatif sont basés sur l'évaluation de la puissance du signal radiofréquence émis par l'organe d'identification portatif et reçu par l'unité centrale.

Selon un autre mode de réalisation, lesdits moyens d'estimation de la distance entre le véhicule et l'organe d'identification portatif comprennent des transducteurs ultrasonores et sont activés par la détection de l'organe d'identification portatif autour du véhicule.

Selon un mode de réalisation supplémentaire, les moyens d'activation de l'unité centrale sont configurés de manière à activer les moyens de reconnaissance optique à distance lorsque l'organe d'identification portatif est, d'une part, localisé dans un périmètre prédéfini autour du véhicule et, d'autre part, se rapproche dudit véhicule. Selon un mode de réalisation additionnel, l'unité centrale comprend des moyens de désactivation permettant de désactiver les moyens de reconnaissance optique à distance après un temps prédéfini.

Selon un autre mode de réalisation l'unité centrale comprend des moyens de désactivation permettant la désactiver les moyens de reconnaissance optique à distance après un temps prédéfini à partir du verrouillage et/ou déverrouillage d'au moins un ouvrant du véhicule automobile.

Selon un mode de réalisation supplémentaire, l'organe d'identification portatif comprend une batterie rechargeable.

Selon un mode de réalisation additionnel, l'organe d'identification portatif comprend des moyens de mesure du niveau de la batterie et des moyens d'inhibition permettant d'inhiber l'émission de signaux radiofréquences destinés à activer lesdits moyens de reconnaissance optique à distance si le niveau de la batterie est inférieur à un niveau prédéterminé.

D'autres avantages et caractéristiques apparaîtront à la lecture de la description d'un exemple de réalisation non limitatif de l'invention, ainsi que des dessins annexés sur lesquels :
- la figure 1 est une vue de dessus d'un véhicule équipé d'un dispositif selon l'invention, - la figure 2 est un schéma synoptique du dispositif selon l'invention et,
- la figure 3 est une vue de côté du véhicule de la figure 1 avec un utilisateur souhaitant ouvrir le coffre du véhicule,

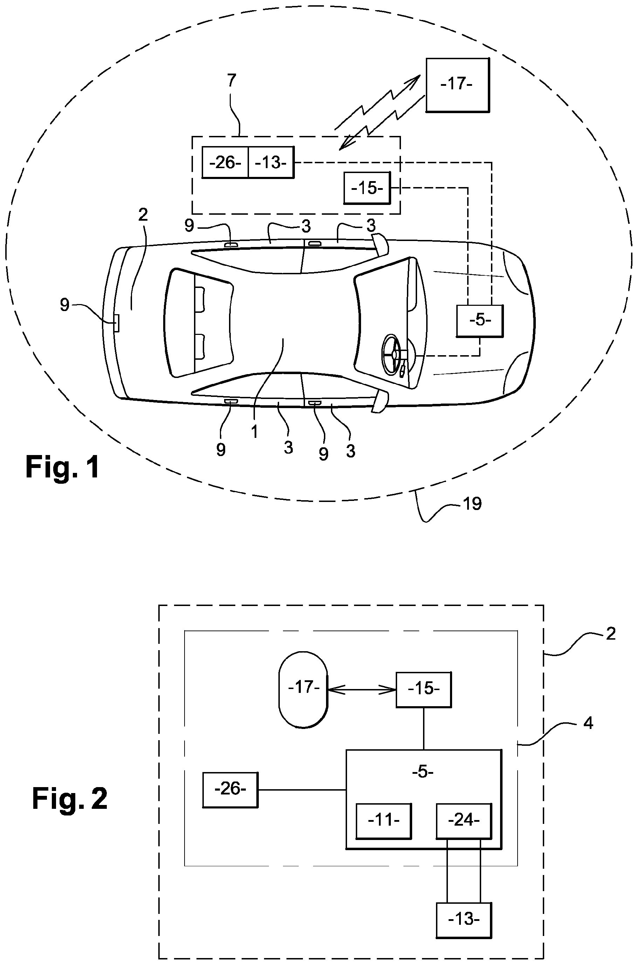

On va maintenant décrire un mode de réalisation de l'invention en référence aux figures 1 à 3. Sur toutes les figures, les éléments identiques portent les mêmes numéros de référence.

La figure 1 montre un véhicule automobile 1 équipé d'un dispositif 2 selon l'invention pour verrouiller et/ou déverrouiller automatiquement un ou plusieurs ouvrants 3 du véhicule automobile 1.

Par ouvrant, on comprend naturellement les portes latérales à pivotement ou à coulissement ainsi que le coffre ou le hayon du véhicule.

Ce dispositif 2 selon l'invention comprend un système d'ouverture à distance 4 pouvant être, par exemple, un système d'accès mains libres, ledit système d'ouverture comprenant une unité centrale 5 destiné à être installée à l'intérieur du véhicule 1 qui est reliée à des périphériques 7 installées par exemple au niveau de ou dans chaque poignée 9. Par poignée, on comprend non seulement les poignées des portières, mais bien entendu aussi celle d'un hayon ou d'un coffre.

Les périphériques 7 comprennent par exemple des moyens de reconnaissance optique à distance tels qu'une caméra 13 pour permettre la reconnaissance d'un geste prédéterminé d'un membre du corps d'un utilisateur 21 , en particulier le mouvement d'un pied, de préférence la rotation d'un pied ou le sens de rotation d'un pied, et un émetteur / récepteur 15 pour permettre la communication à distance avec un organe d'identification portatif 17 porté par l'utilisateur 21 du véhicule 1.

Selon un mode de réalisation alternatif non représenté, on envisage l'utilisation d'un capteur infrarouge tel que connu dans le document US2006/044800 pour suivre et reconnaître les gestes d'un utilisateur 21.

Bien entendu, les émetteurs / récepteurs 15 peuvent également être disposés dans d'autres endroits du véhicule indépendamment des poignées, comme par exemple le plafond du véhicule ou dans les montants ou les pares chocs. En ce qui concerne les caméras 13, celles-ci peuvent être des caméras noir et blanc ou en couleur. Elles sont activées par des moyens d'activation 11 situés au niveau de l'unité centrale 5 et sont avantageusement agencées de manière que l'axe optique 18 soit perpendiculaire aux plans latéraux ou arrière du véhicule 1 pour éviter tout effet de masque vis-à-vis de la caméra quand on est face à l'ouvrant.

L'organe d'identification portatif 17 est par exemple réalisé sous forme d'un badge et comporte des moyens de radiocommunication avec l'émetteur / récepteur 15 relié à l'unité centrale 5 pour permettre la communication par radiofréquences à distance avec l'organe d'identification portatif 17. Cette communication peut-être réalisée par des ondes hautes fréquences, c'est à dire comprises entre 50 et 500 Mhz ou par des ondes basses fréquences, c'est à dire comprises entre 50 et 500 kHz selon l'équipement choisi. Les valeurs généralement utilisées sont 125 kHz pour les ondes basses fréquences et 343 ou 423 Mhz pour les hautes fréquences.

Cette communication sert en particulier à l'authentification de l'organe d'identification portatif 17, c'est-à-dire à la vérification que ledit organe 17 est bien associé au véhicule 1.

L'authentification est déclenchée lorsque l'organe d'identification portatif 17 est détecté à l'intérieur d'un périmètre prédéfini 19 autour du véhicule 1.

La forme du périmètre 19 est dans le présent cas une ellipse, mais bien entendu, d'autres formes peuvent également être envisagées.

Par ailleurs, l'organe d'identification portatif 17 comprend comme source énergie une batterie ou un accumulateur et de préférence des moyens de détermination du niveau d'énergie de cette source. De plus, la reconnaissance optique d'un geste prédéterminé d'un membre du corps afin de permettre une ouverture automatique d'un ouvrant 3 de véhicule automobile 1 telle que décrit dans la présente invention peut être considérée comme une fonction de confort. Ainsi, dans le cas où le niveau d'énergie de la batterie ou de l'accumulateur de l'organe d'identification 17 est inférieure à une valeur prédéterminée, ladite fonction de confort est inhibée dans le but de conserver l'énergie disponible pour les fonctions essentielles telles que le déverrouillage par télécommande des ouvrants 3 du véhicule 1 par exemple.

Selon un mode de réalisation alternatif, l'organe d'identification portatif 17 possède d'une part une batterie de secours et d'autre part une batterie rechargeable. Les fonctions dites de « confort » telles que le déverrouillage automatique d'un ouvrant 3 décrit dans la présente invention étant alimentées seulement par la batterie rechargeable. La batterie de secours permet l'alimentation des fonctions de base telles que l'ouverture par télécommande des ouvrants lorsque la batterie rechargeable est déchargée. Ainsi, les fonctions de base de l'organe d'identification portatif 17 peuvent toujours être assurées quel que soit le niveau de la batterie rechargeable.

Par ailleurs, lorsque le niveau de la batterie de l'organe d'identification portatif 17 est inférieur à un niveau prédéterminé, ledit organe d'identification 17 peut envoyer un signal au véhicule indiquant que le niveau de sa batterie est faible. En réponse à ce message, le véhicule peut alors cesser d'essayer de communiquer avec ledit organe d'identification, permettant par la même d'optimiser la consommation de la batterie du véhicule. Un nouveau signal étant envoyé au véhicule lorsque le niveau de la batterie de l'organe d'identification portatif 17 redevient supérieur au niveau prédéterminé afin de rétablir les communications entre le véhicule et ledit organe d'identification 17.

Dans un mode de réalisation préférentiel, le véhicule comporte des moyens de mesure du niveau de charge de la batterie du véhicule, aptes à comparer ce niveau avec un niveau de référence. Ces moyens sont, par exemple, constitués par l'unité centrale 5. Lorsque le niveau de charge de la batterie franchit à la baisse le niveau de référence, l'unité centrale 5 commande alors l'arrêt de la présente fonctionnalité de lancement de la caméra. A cet effet, l'unité centrale 5 provoque l'arrêt de fonctions d'interrogation du module d'identification et/ou de réception et prise en compte e d'un signal ventant de ce module d'identification et spécifiquement dessiné au lancement de la caméra.

Par une telle inhibition du traitement, ayant lieu dans le véhicule et destiné à la mise en route de la caméra, une partie de la consommation appliquée sur la batterie du véhicule est annulée et la durée de vie restant de la batterie s'en trouve allongée.

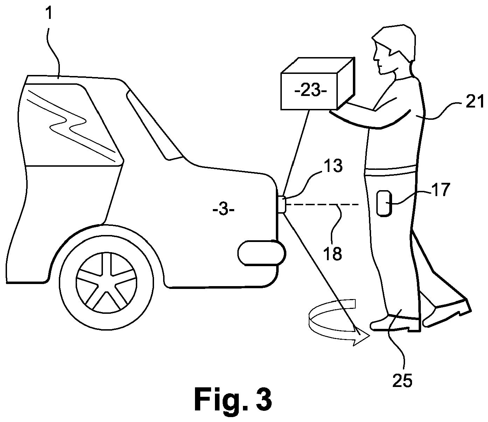

On se tournera maintenant plus particulièrement vers la figure 3 pour décrire le fonctionnement du dispositif selon l'invention.

Sur la figure 3, on a représenté un utilisateur 21 portant un organe d'identification portatif 17 dans une poche et chargé d'un objet 23 qu'il souhaite déposer dans le coffre 3 du véhicule 1.

Dans un premier temps, on détecte la présence de l'organe d'identification portatif 17 dans le périmètre prédéfini 19 autour du véhicule 1.

La détection d'un organe 17 va réveiller dans l'unité centrale 5 un calculateur d'accès qui procède par radiocommunication à l'authentification de l'organe d'identification portatif 17 pour vérifier que ce dernier est bien associé au véhicule 1.

En cas d'authentification négative, on continue la scrutation afin de détecter la présence d'un organe d'identification 17 à l'intérieur d'un périmètre 19.

En cas d'authentification positive, on place le système d'ouverture à distance 4 dans un état « prêt à déverrouiller » pour tous les ouvrants.

Alternativement, en cas de détection positive, on détermine la distance séparant l'organe d'identification portatif 17 du véhicule et on place le système d'ouverture à distance 4 dans un état « prêt à déverrouiller » pour tous les ouvrants 3 lorsque cette distance est inférieure à une valeur prédéfinie, 5 mètres par exemple. De manière préférentielle, afin d'éviter l'activation inopportune de l'état « prêt à déverrouiller » lorsque l'organe d'identification portatif 17 est stocké à proximité du véhicule 1 , une condition de rapprochement dudit organe 17 vers le véhicule 1 est nécessaire à l'activation de l'état « prêt à déverrouiller ».

La mesure ou estimation de la distance entre l'organe d'identification portatif 17 et le véhicule 1 est réalisée en mesurant ou estimant la puissance des signaux reçus et en comparant cette puissance à une base de données comprenant la valeur des puissances des signaux émis par l'organe d'identification portatif 17 et reçus par les émetteurs /récepteurs 15 en fonction de la distance qui les sépare.

Alternativement, la détermination de la distance entre l'organe d'identification portatif 17 et le véhicule 1 peut être réalisée à l'aide de transducteurs ultrasonores, ces derniers étant activés lorsque ledit organe d'identification portatif 17 est détecté.

L'état « prêt à déverrouiller » a pour conséquence d'activer, grâce aux moyens d'activation 11 , les caméras 13 qui commencent à enregistrer des images. Les moyens de reconnaissance optique à distance 13, 24 d'un geste prédéterminé d'un membre du corps, notamment la caméra, sont donc seulement activés après une authentification positive ou lorsque la distance entre l'organe d'identification portatif 17 est à une distance réduite du véhicule 1 , ce qui permet une gestion optimisée de l'énergie de la batterie dudit véhicule 1.

De préférence, dans un premier temps, par l'intermédiaire des caméras 13 et un calculateur de traitement d'images 24 dans l'unité centrale 5, on identifie l'ouvrant devant quel se trouve l'utilisateur 21.

Une fois que l'unité centrale 3 a déterminé l'ouvrant concerné, les caméras associées aux autres ouvrants arrêtent d'enregistrer des images pour libérer de la capacité de traitement pour le calculateur de traitement d'images 24. Alternativennent, un capteur d'approche 26 est également placé dans la poignée 9 ou à proximité de celle-ci pour activer seulement la caméra de l'ouvrant 3 concerné.

Dans le présent exemple, l'ouvrant concerné 3 est le coffre du véhicule automobile 1 (voir figure 3).

On reconnaît ensuite optiquement à distance par la caméra 13 un geste prédéterminé d'un membre du corps. Cette étape de reconnaissance optique à distance par une caméra d'un geste prédéterminé d'un membre du corps est réalisée de préférence à partir d'images en niveaux de gris pour optimiser le couple capacité / coût du calculateur de traitement d'images 24.

Il s'est avéré judicieux de pouvoir reconnaître le mouvement d'un pied 25, en particulier le mouvement de rotation ou le sens de rotation du pied 25 de l'utilisateur 21. En effet, le mouvement d'un pied est discret tout en étant bien reconnaissable pour la caméra et le calculateur de traitement d'images.

En cas de reconnaissance positive du geste, l'ouvrant 3 devant lequel le geste a été exécuté, est déverrouillé, c'est-à-dire la serrure est déverrouillée.

Si le coffre est équipé de ressorts adaptés le sollicitant automatiquement vers une position ouverte, alors, le coffre s'ouvre.

Dans le cas où l'ouvrant 3 est équipé d'une unité d'assistance motorisée à l'ouverture de l'ouvrant (non représenté), il s'ensuit une ouverture automatique de l'ouvrant 3 par l'intermédiaire de l'unité d'assistance motorisée.

On comprend donc que grâce aux caractéristiques de l'invention, l'utilisateur peut accéder aisément et de façon sécurisée à son véhicule. Le système se distingue en outre par une gestion optimisée de la consommation d'énergie étant donné que le dispositif est activé seulement lorsque l'utilisateur est à proximité immédiate du véhicule.

Les exemples de réalisation décrits ci avant pour l'ouverture d'un ouvrant de véhicule automobile, sont dans une variante appliqués à la fermeture d'un ouvrant, avec les mêmes étapes et les mêmes moyens, par exemple.

L'unité centrale identifie avantageusement l'état d'ouverture/fermeture de l'ouvrant au moment même où les mêmes étapes sont mises en œuvre, et déclenche respectivement la fermeture ou l'ouverture de l'ouvrant selon son état respectif ouvert ou fermé.

L'ouvrant pouvant être commandé grâce aux moyens décrits ne se limite pas à un ouvrant de coffre de véhicule automobile. Il peut être constitué par une porte latérale, une vitre, un toit ouvrant ou tout autre type d'ouvrant adapté à un véhicule de type connu en soi.

Par exemple, les présents moyens peuvent être mis en œuvre dans le cadre de l'invention pour le verrouillage et/ou le déverrouillage et/ou pour l'entraînement motorisé en ouverture ou en fermeture de plusieurs ouvrants simultanément.

L'invention s'applique par exemple à la fermeture et/ou ouverture des vitres du véhicule avec le toit ouvrant de ce même véhicule, simultanément.

## Revendications

1. Dispositif pour verrouiller et/ou déverrouiller automatiquement au moins un ouvrant (3) d'un véhicule automobile (1) comprenant un système d'ouverture à distance (4) comprenant une unité centrale (5) destinée à être installée à l'intérieur du véhicule, un organe d'identification portatif (17), ladite unité centrale (5) étant apte à authentifier par radiofréquences l'organe d'identification portatif (17), des moyens de reconnaissance optique à distance d'un geste prédéterminé d'un membre du corps pour verrouiller et/ou déverrouiller ledit au moins un ouvrant devant lequel le geste a été exécuté en cas de reconnaissance positive du geste, l'unité centrale comprenant des moyens d'activation (11) permettant d'activer lesdits moyens de reconnaissance optique à distance lorsque l'organe d'identification portatif (17) est localisé dans un périmètre prédéfini (19) autour du véhicule (1), comprenant une pluralité d'ouvrants (3), **caractérisé en ce que** lesdits moyens de reconnaissance optique à distance comprennent une pluralité de caméras (13), chacune desdites caméras étant associée auxdits ouvrants (3) et **en ce que** lesdites caméras (13) sont agencées de manière à ce que leur axe optique (18) soit perpendiculaire aux plans latéraux ou arrière du véhicule (1).

2. Dispositif pour verrouiller et/ou déverrouiller automatiquement au moins un ouvrant (3) d'un véhicule automobile (1) selon la revendication 1, **caractérisé en ce que** le véhicule automobile (1) comporte une batterie et des moyens de mesure du niveau de charge de ladite batterie, constitués par l'unité centrale (5), ladite unité centrale étant conçue pour commander l'arrêt de la fonctionnalité de lancement de la caméra (13) lorsque le niveau de charge de la batterie franchit à la baisse un niveau de référence prédéterminé.

3. Dispositif pour verrouiller et/ou déverrouiller automatiquement au moins un ouvrant (3) d'un véhicule automobile (1) selon l'une des revendications 1 ou 2, **caractérisé en ce que** les moyens d'activation (11) sont commandés en réponse à l'authentification de l'organe d'identification portatif (17).

4. Dispositif pour verrouiller et/ou déverrouiller automatiquement au moins un ouvrant (3) d'un véhicule automobile selon l'une quelconque des revendications 1 à 3, **caractérisé en ce que** le système d'ouverture à distance (4) est un système d'accès mains libres (4).

5. Dispositif pour verrouiller et/ou déverrouiller automatiquement au moins un ouvrant (3) d'un véhicule automobile selon l'une des revendications précédentes **caractérisé en ce que** l'unité centrale (5) est configurée de manière à émettre de manière cyclique des signaux radiofréquences afin de détecter la présence d'un organe d'identification portatif (17).

6. Dispositif pour verrouiller et/ou déverrouiller automatiquement au moins un ouvrant (3) d'un véhicule automobile selon la revendication 5 **caractérisé en ce que** les signaux radiofréquences sont des signaux basse fréquence compris entre 50 et 500 kHz.

7. Dispositif pour verrouiller et/ou déverrouiller automatiquement au moins un ouvrant (3) d'un véhicule automobile (1) selon la revendication 5 **caractérisé en ce que** les signaux radiofréquences sont des signaux haute fréquence compris entre 50 et 500 MHz.

8. Dispositif pour verrouiller et/ou déverrouiller automatiquement au moins un ouvrant (3) d'un véhicule automobile (1) selon l'une des revendications précédentes **caractérisé en ce que** l'unité centrale (5) comprend des moyens d'estimation de la distance entre le véhicule (1) et l'organe d'identification portatif (17).

9. Dispositif pour verrouiller et/ou déverrouiller automatiquement au moins un ouvrant (3) d'un véhicule automobile selon la revendication 8 **caractérisé en ce que** lesdits moyens d'estimation de la distance entre le véhicule (1) et l'organe d'identification portatif (17) sont basés sur l'évaluation de la puissance du signal radiofréquence émis par l'organe d'identification portatif (17) et reçu par l'unité centrale (5).

10. Dispositif pour verrouiller et/ou déverrouiller automatiquement au moins un ouvrant (3) d'un véhicule automobile (1) selon la revendication 8 **caractérisé en ce que** lesdits moyens d'estimation de la distance entre le véhicule (1) et l'organe d'identification portatif (17) comprennent des transducteurs ultrasonores et soient activés par la détection de l'organe d'identification portatif (17) autour du véhicule (1).

11. Dispositif pour verrouiller et/ou déverrouiller automatiquement au moins un ouvrant (3) d'un véhicule automobile (1) selon la revendication 9 ou 10 **caractérisé en ce que** les moyens d'activation de l'unité centrale (5) sont configurés de manière à activer les moyens de reconnaissance optique à distance (13) lorsque l'organe d'identification portatif (17) est, d'une part, localisé dans un périmètre prédéfini (19) autour du véhicule (1) et, d'autre part, se rapproche dudit véhicule (1).

12. Dispositif pour verrouiller et/ou déverrouiller automatiquement au moins un ouvrant (3) d'un véhicule automobile selon l'une des revendications précédentes **caractérisé en ce que** l'unité centrale (5) comprend des moyens de désactivation permettant de désactiver les moyens de reconnaissance optique à distance (13) après un temps prédéfini.

13. Dispositif pour verrouiller et/ou déverrouiller automatiquement au moins un ouvrant (3) d'un véhicule automobile (1) selon l'une des revendications précédentes **caractérisé en ce que** l'unité centrale (5) comprend des moyens de désactivation permettant de désactiver les moyens de reconnaissance optique à distance (13) après un temps prédéfini à partir du verrouillage et/ou déverrouillage dudit ouvrant (3) du véhicule automobile (1).

14. Dispositif pour verrouiller et/ou déverrouiller automatiquement au moins un ouvrant (3) d'un véhicule automobile (1) selon l'une des revendications précédentes **caractérisé en ce que** l'organe d'identification portatif (17) comprend une batterie rechargeable.

15. Dispositif pour verrouiller et/ou déverrouiller automatiquement au moins un ouvrant (3) d'un véhicule automobile selon l'une des revendications précédentes **caractérisé en ce que** l'organe d'identification portatif (17) comprend des moyens de mesure du niveau de la batterie et des moyens d'inhibition permettant d'inhiber l'émission de signaux radiofréquences destinés à activer lesdits moyens de reconnaissance optique à distance si le niveau de la batterie est inférieur à un niveau prédéterminé.

## Patentansprüche

1. Vorrichtung zum automatischen Verriegeln und/oder Entriegeln mindestens einer Öffnungseinrichtung (3) eines Kraftfahrzeugs (1), umfassend ein Fernöffnungssystem (4), das eine Zentraleinheit (5) umfasst, die dazu bestimmt ist, im Inneren des Fahrzeugs installiert zu werden, ein tragbares Identifizierungsorgan (17), wobei die Zentraleinheit (5) imstande ist, über Funkfrequenzen das tragbare Identifizierungsorgan (17) zu authentifizieren, optische Fernerkennungsmittel einer vorbestimmten Gebärde eines Körperglieds zum Verriegeln und/oder Entriegeln der mindestens einen Öffnungseinrichtung, vor dem die Gebärde ausgeführt worden ist, im Falle einer positiven Erkennung der Gebärde, wobei die Zentraleinheit Aktivierungsmittel (11) umfasst, die es ermöglichen, die optischen Fernerkennungsmittel zu aktivieren, wenn das tragbare Identifizierungsorgan (17) in einem zuvor definierten (19) Aktionsradius um das Fahrzeug (1) herum, das eine Vielzahl von Öffnungseinrichtungen (3) umfasst, lokalisiert ist, **dadurch gekennzeichnet, dass** die optischen Fernerkennungsmittel eine Vielzahl von Kameras (13) umfassen, wobei jede der Kameras den Öffnungseinrichtungen (3) zugewiesen ist, und dadurch, dass die Kameras (13) derart angeordnet sind, dass ihre optische Achse (18) senkrecht zu den seitlichen Ebenen oder Rückseite des Fahrzeugs (1) ist.

2. Vorrichtung zum automatischen Verriegeln und/oder Entriegeln mindestens einer Öffnungseinrichtung (3) eines Kraftfahrzeugs (1) nach Anspruch 1, **dadurch gekennzeichnet, dass** das Kraftfahrzeug (1) eine Batterie und Mittel zum Messen des Ladeniveaus der Batterie beinhaltet, die durch die Zentraleinheit (5) gebildet werden, wobei die Zentraleinheit gestaltet ist, um den Halt der Funktion zum Starten der Kamera (13) zu steuern, wenn das Ladeniveau der Batterie ein vorbestimmtes Referenzniveau nach unten übersteigt.

3. Vorrichtung zum automatischen Verriegeln und/oder Entriegeln mindestens einer Öffnungseinrichtung (3) eines Kraftfahrzeugs (1) nach einem der Ansprüche 1 oder 2, **dadurch gekennzeichnet, dass** die Aktivierungsmittel (11) als Reaktion auf die Authentifizierung des tragbaren Identifizierungsorgans (17) gesteuert werden.

4. Vorrichtung zum automatischen Verriegeln und/oder Entriegeln mindestens einer Öffnungseinrichtung (3) eines Kraftfahrzeugs nach einem der Ansprüche 1 bis 3, **dadurch gekennzeichnet, dass** das Fernöffnungssystem (4) ein Freihandzugangssystem (4) ist.

5. Vorrichtung zum automatischen Verriegeln und/oder Entriegeln mindestens einer Öffnungseinrichtung (3) eines Kraftfahrzeugs nach einem der vorstehenden Ansprüche, **dadurch gekennzeichnet, dass** die Zentraleinheit (5) derart konfiguriert ist, um zyklisch Funkfrequenzsignale auszugeben, um die Präsenz eines tragbaren Identifizierungsorgans (17) zu detektieren.

6. Vorrichtung zum automatischen Verriegeln und/oder Entriegeln mindestens einer Öffnungseinrichtung (3) eines Kraftfahrzeugs nach Anspruch 5, **dadurch gekennzeichnet, dass** die Funkfrequenzsignale Niederfrequenzsignale zwischen 50 und 500 kHz sind.

7. Vorrichtung zum automatischen Verriegeln und/oder Entriegeln mindestens einer Öffnungseinrichtung (3) eines Kraftfahrzeugs (1) nach Anspruch 5, **dadurch gekennzeichnet, dass** die Funkfrequenzsignale Hochfrequenzsignale zwischen 50 und 500 MHz sind.

8. Vorrichtung zum automatischen Verriegeln und/oder Entriegeln mindestens einer Öffnungseinrichtung (3) eines Kraftfahrzeugs (1) nach einem der vorstehenden Ansprüche, **dadurch gekennzeichnet, dass** die Zentraleinheit (5) Mittel zum Schätzen des Abstands zwischen dem Fahrzeug (1) und dem tragbaren Identifizierungsorgan (17) umfasst.

9. Vorrichtung zum automatischen Verriegeln und/oder Entriegeln mindestens einer Öffnungseinrichtung (3) eines Kraftfahrzeugs nach Anspruch 8, **dadurch gekennzeichnet, dass** die Mittel zum Schätzen des Abstands zwischen dem Fahrzeug (1) und dem tragbaren Identifizierungsorgan (17) auf der Bewertung der Leistung des Funkfrequenzsignals, das von dem tragbaren Identifizierungsorgan (17) ausgegeben wird, und von der Zentraleinheit (5) empfangen wird, basieren.

10. Vorrichtung zum automatischen Verriegeln und/oder Entriegeln mindestens einer Öffnungseinrichtung (3) eines Kraftfahrzeugs (1) nach Anspruch 8, **dadurch gekennzeichnet, dass** die Mittel zum Schätzen des Abstands zwischen dem Fahrzeug (1) und dem tragbaren Identifizierungsorgan (17) Ultraschall-Wandler umfassen und durch die Detektion des tragbaren Identifizierungsorgans (17) um das Fahrzeug (1) herum aktiviert werden.

11. Vorrichtung zum automatischen Verriegeln und/oder Entriegeln mindestens einer Öffnungseinrichtung (3) eines Kraftfahrzeugs (1) nach Anspruch 9 oder 10, **dadurch gekennzeichnet, dass** Mittel zum Aktivieren der Zentraleinheit (5) derart konfiguriert sind, um die optischen Fernerkennungsmittel (13) zu aktivieren, wenn das tragbare Identifizierungsorgan (17) einerseits in einem vordefinierten Aktionsradius (19) um das Fahrzeug (1) herum lokalisiert wird, und sich andererseits dem Fahrzeug (1) annähert.

12. Vorrichtung zum automatischen Verriegeln und/oder Entriegeln mindestens einer Öffnungseinrichtung (3) eines Kraftfahrzeugs nach einem der vorstehenden Ansprüche, **dadurch gekennzeichnet, dass** die Zentraleinheit (5) Deaktivierungsmittel umfasst, die es ermöglichen, die optischen Fernerkennungsmittel (13) nach einer vordefinierten Zeit zu deaktivieren.

13. Vorrichtung zum automatischen Verriegeln und/oder Entriegeln mindestens einer Öffnungseinrichtung (3) eines Kraftfahrzeugs (1) nach einem der vorstehenden Ansprüche, **dadurch gekennzeichnet, dass** die Zentraleinheit (5) Deaktivierungsmittel umfasst, die es ermöglichen, die optischen Fernerkennungsmittel (13) nach einer vordefinierten Zeit ab dem Verriegeln und/oder Entriegeln der Öffnungseinrichtung (3) des Kraftfahrzeugs (1) zu deaktivieren.

14. Vorrichtung zum automatischen Verriegeln und/oder Entriegeln mindestens einer Öffnungseinrichtung (3) eines Kraftfahrzeugs (1) nach einem der vorstehenden Ansprüche, **dadurch gekennzeichnet, dass** das tragbare Identifizierungsorgan (17) eine aufladbare Batterie umfasst.

15. Vorrichtung zum automatischen Verriegeln und/oder Entriegeln mindestens einer Öffnungseinrichtung (3) eines Kraftfahrzeugs nach einem der vorstehenden Ansprüche, **dadurch gekennzeichnet, dass** das tragbare Identifizierungsorgan (17) Mittel zum Messen des Niveaus der Batterie und Unterdrückungsmittel umfasst, die es ermöglichen, die Ausgabe von Funkfrequenzsignalen, die dazu bestimmt sind, die optischen Fernerkennungsmittel zu aktivieren zu unterdrücken, wenn das Niveau der Batterie niedriger als ein vorbestimmtes Niveau ist.

## Claims

1. A device for automatically locking and/or unlocking at least one door leaf (3) of a motor vehicle (1) comprising a remote opening system (4) comprising a central unit (5) intended to be installed inside the vehicle, a portable identification member (17), said central unit (5) being capable of authenticating by radiofrequency the portable identification member (17), remote optical recognition means for optically recognizing a predetermined gesture of a limb of the body for locking and/or unlocking said at least one door leaf in front of which the gesture has been executed in case of positive recognition of the gesture, the central unit comprising activation means (11) allowing said remote optical recognition means to be activated when the portable identification member (17) is located in a predefined perimeter (19) around the vehicle (1), comprising a plurality of door leafs (3), **characterized in that** said remote optical recognition means comprise a plurality of cameras (13), each of said cameras being associated to said door leafs (3) and **in that** said cameras (13) are arranged in such a manner that their optical axis (18) is perpendicular to lateral or rear plans of the vehicle (1).

2. The device for automatically locking and/or unlocking at least one door leaf (3) of a motor vehicle (1) according to claim 1, **characterized in that** the motor vehicle (1) includes a battery and measuring means for measuring the charge level of said battery, constituted by the central unit (5), said central unit being designed to control the stopping of the functionality of launching the camera (13) when the charge level of the battery drops below a predetermined reference level.

3. The device for automatically locking and/or unlocking at least one door leaf (3) of a motor vehicle (1) according to any of claims 1 or 2, **characterized in that** the activation means (11) are controlled in response to the authentication of the portable identification member (17).

4. The device for automatically locking and/or unlocking at least one door leaf (3) of a motor vehicle according to any one of claims 1 to 3, **characterized in that** the remote opening system (4) is a hands-free access system (4).

5. The device for automatically locking and/or unlocking at least one door leaf (3) of a motor vehicle according to any of the preceding claims, **characterized in that** the central unit (5) is configured in a manner to emit radiofrequency signals in a cyclic manner in order to detect the presence of a portable identification member (17).

6. The device for automatically locking and/or unlocking at least one door leaf (3) of a motor vehicle according to claim 5, **characterized in that** the radiofrequency signals are low-frequency signals comprised between 50 and 500 kHz.

7. The device for automatically locking and/or unlocking at least one door leaf (3) of a motor vehicle (1) according to claim 5, **characterized in that** the radiofrequency signals are high-frequency signals comprised between 50 and 500 kHz.

8. The device for automatically locking and/or unlocking at least one door leaf (3) of a motor vehicle (1) according to any of the preceding claims, **characterized in that** the central unit (5) comprises means for estimating the distance between the vehicle (1) and the portable identification member (17).

9. The device for automatically locking and/or unlocking at least one door leaf (3) of a motor vehicle according to claim 8, **characterized in that** said means for estimating the distance between the vehicle (1) and the portable identification member (17) are based on the evaluation of the power of the radiofrequency signal emitted by the portable identification member (17) and received by the central unit (5).

10. The device for automatically locking and/or unlocking at least one door leaf (3) of a motor vehicle (1) according to claim 8, **characterized in that** said means for estimating the distance between the vehicle (1) and the portable identification member (17) comprise ultrasonic transducers and are activated by the portable identification member (17) around the vehicle (1).

11. The device for automatically locking and/or unlocking at least one door leaf (3) of a motor vehicle (1) according to claim 9 or 10, **characterized in that** the activation means of the central unit (5) are configured in a manner to activate the remote optical recognition means when the portable identification member (17) is, on the one hand, located in a predefined perimeter (19) around the vehicle (1) and, on the other hand, is approaching said vehicle (1).

12. The device for automatically locking and/or unlocking at least one door leaf (3) of a motor vehicle according to any of the preceding claims, **characterized in that** the central unit (5) comprise deactivation means allowing to deactivate the remote optical recognition means after a predefined time.

13. The device for automatically locking and/or unlocking at least one door leaf (3) of a motor vehicle (1) according to any of the preceding claims, **characterized in that** the central unit (5) comprise deactivation means allowing to deactivate the remote optical recognition means after a predefined time from the locking and/or unlocking of said door leaf (3) of the motor vehicle (1).

14. The device for automatically locking and/or unlocking at least one door leaf (3) of a motor vehicle (1) according to any of the preceding claims, **characterized in that** the portable identification member (17) comprise a rechargeable battery.

15. The device for automatically locking and/or unlocking at least one door leaf (3) of a motor vehicle according to any of the preceding claims, **characterized in that** the portable identification member (17) comprise means for measuring the battery level and inhibition means allowing to inhibit the emission of radiofrequency signals intended to activate said remote optical recognition means if the level of the battery is lower than a predetermined level.
